# EUROPEAN PATENT SPECIFICATION

(11) **EP 3 562 362 B1**
(45) Date of publication and mention of the grant of the patent: **26.07.2023**
(21) Application number: 17886625.7
(22) Date of filing: 22.12.2017
(51) Int. Cl.: A47K 3/28, E03B 1/04, E03C 1/04

(54) **METHOD FOR ADAPTING A WATER RECYCLING DEVICE TO EXTERNAL CONDITIONS**
VERFAHREN ZUR ANPASSUNG EINER WASSERRECYCLINGVORRICHTUNG AN EXTERNE BEDINGUNGEN
PROCÉDÉ D'ADAPTATION D'UN DISPOSITIF DE RECYCLAGE D'EAU À DES CONDITIONS EXTERNES

(30) Priority: 30.12.2016 SE 1651759
(43) Date of publication of application: 06.11.2019
(73) Proprietor: Orbital Systems AB, 211 20 Malmö (SE)
(72) Inventor: MAHDJOUBI NAMIN, Amir Mehrdad, 211 20 Malmö (SE)
(74) Representative: AWA Sweden AB
(86) International application number: PCT/SE2017/051337
(87) International publication number: WO 2018/124961

(56) References cited:
- WO-A1-2009/147647
- WO-A1-2009/147647
- WO-A1-2015/094109
- US-A- 4 828 709
- US-A1- 2003 080 194
- US-A1- 2015 148 971
- US-A1- 2016 281 338
- US-A1- 2016 281 338
- US-B1- 6 286 764

## Description

### Technical field

The systems and methods described herein generally relates to the field of water recycling. More particularly, concepts for adapting a water recycling device to external conditions are presented.

### Background

In many parts of the world, clean water is becoming a scarce commodity. Consequently, systems for purification and recycling of water has found applications across many fields. Water recycling devices have thus naturally been developed to deal with a number of different factors associated with the various applications. For example, the water recycling device may be modified in advance in order to account for factors present in the application not changing over time. To provide certain examples, in US 4828709, WO 2009/147647 and WO 2015/094109 there are disclosed two types of water recycling devices. Moreover, in US 2016/281338 there is also disclosed a water recirculating system. In this case there is provided a safety device of a recirculating-water utilization system to be constructed in a specific area, which includes a monitoring capability in the form of different types of monitor units, which in turn are connected to a purifying unit of the system.

There remains factors that cannot be accounted for in advance and which must be taken into consideration in order for the water recycling device to operate efficiently. In addition, the properties of some factors, such as variation over time, may be difficult to predict.

There is therefore a need for improving water recycling devices with respect to different applications and ease of use, reliability, efficiency, and operating cost.

### Summary of the invention

It is an object of the present inventive concept to mitigate, alleviate or eliminate one or more of the above-identified deficiencies in the art and disadvantages singly or in combination.

According to a first aspect, these and other objects are achieved in full, or at least in part, by a method for adapting a water recycling device to external conditions as defined in claim 1, with preferred embodiments defined in the dependent claims.

According to a second aspect it is provided a water recycling device as defined in claim 6.

Other objectives, features and advantages will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of different embodiments of the present inventive concept, with reference to the appended drawings, wherein:
FIG. 1 schematically illustrates an example of a water recycling device;
FIG. 2 schematically illustrates the relationship between internal and external data, and internal and external conditions;
FIG. 3 schematically illustrates an example of how internal and external conditions of a water recycling device can be defined.
FIG. 4 is a flow chart of an example of a method for adapting a water recycling device to external conditions.

### Detailed description

In general, it has been realized by the inventors that water recycling devices need to be configured according to external conditions of the water recycling device in order for the water recycling device to operate efficiently, reliably, and at a low cost. In order to identify an external condition, internal data generated by the water recycling device may be analyzed. In addition, external data generated by external devices may be analyzed. This arrangement provides a reliable way of identifying an external condition of the water recycling device, and assures that the water recycling device can be adjusted accordingly. It may be possible to identify an internal condition of the water recycling device by analyzing the internal and/or external data.

The present disclosure describes a water recycling device. Initially, some terminology may be defined to provide clarification for the following disclosure.

The term 'drain' referred to in the present disclosure is not to be given the conventional meaning of a drain; a conventional drain is a fixture that provides an exit-point for waste water. In the present disclosure, the term 'drain' may be exchanged for a collecting arrangement, a sensor tank, a recirculation tank, or a floor unit. The term 'drain' implies a point leading to a e.g. a sewage, but wherein the drain does in fact not form part of the sewage itself. In particular, the drain may comprise the sensor arrangement or at least part of the sensor arrangement.

Throughout the present disclosure reference is made to a "state" of an object. A state may refer to a performance of the object, such as if the object is performing as intended. A state may refer to a specific type of the object in case there exist several different types of the object. In other words, a state may refer to a specific type of object in case there exist several different types of the object to choose from.

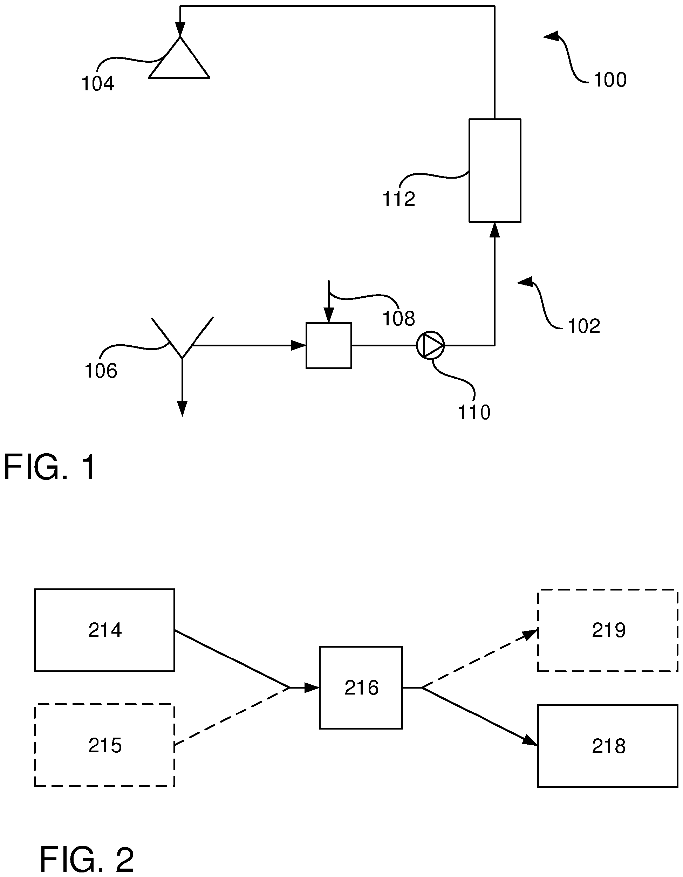

With reference to FIG. 1, an example of a water recycling device 100 is shown. The water recycling device 100 comprises an outlet 104 configured to output water. The outlet 104 may be a showerhead, a nozzle, or the like. The water recycling device comprises a drain 106 for collecting used water output by the outlet 104; a recirculation loop 102 in liquid communication with the drain 106 and the outlet 104, the recirculation loop comprising a water treatment arrangement 112 for treating the used water. The water recycling device may further comprise a heating arrangement for heating water in the water recycling device 100. The water recycling device further comprises a sensor arrangement configured to measure a water quality parameter of water in said water recycling device. The water recycling device 100 further comprises an external water path 108 in liquid communication with the recirculation loop, the external water path 108 being connected to an external water outlet. Water from the external water path 108 may hereafter be referred to as external water. The water recycling device 100 may further comprise a circulation pump 110. The circulation pump 110 may provide for at least part of a flow of water in the water recycling device 100. A water treatment arrangement 112 may be placed downstream of the circulation pump 110. The water treatment arrangement 112 may comprise a filter arrangement and/or a UV light treatment arrangement. The water treatment arrangement 112 may comprise at least one filter, such as a nanofilter, a microfilter, or a nanofilter and a microfilter. The water treatment arrangement 112 may comprise at least one particle filter and at least one microbiological filter. The water treatment arrangement 112 may comprise at least one active substance for reducing harmful effects of microorganisms in water passing the water treatment arrangement 112. Such an active substance may for example be contained within a filter media of the filter, and/or be released to the water inside the water treatment arrangement 112. Water which has been treated by the water treatment arrangement 112 may hereafter be referred to as treated water. The heating arrangement may comprise a UV light treatment arrangement. The heating arrangement may be combined with the water treatment arrangement 112.

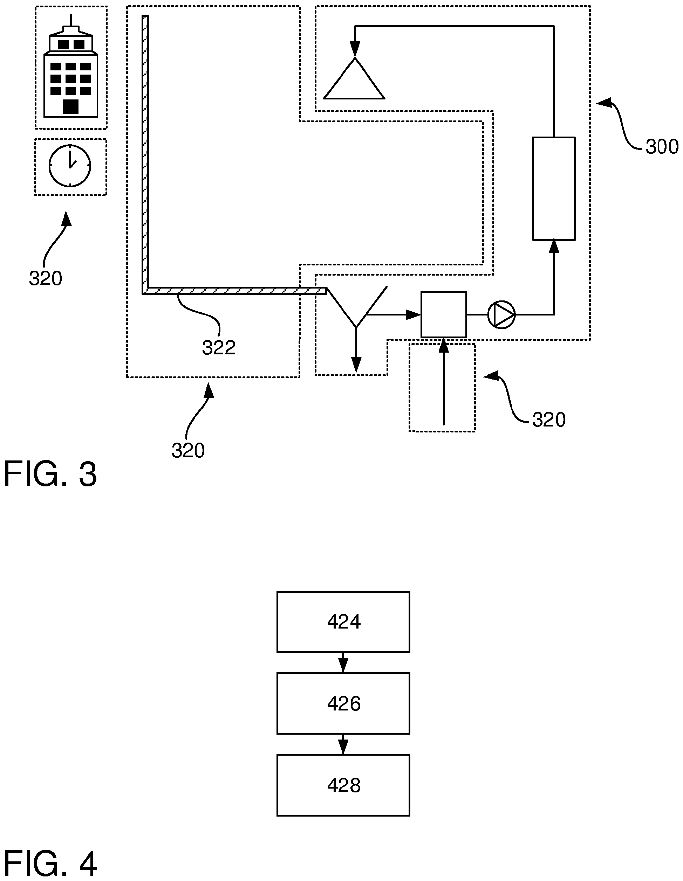

Now referring to FIG. 2, internal data 214 and optionally external data 215 may be analyzed 216 in order to identify an external condition 218 and optionally an internal condition 219. A number of operating parameters of the water recycling device may then be automatically adjusted based on the identified external condition 218 and optionally based on the internal condition 219. The internal and external condition 218, 219 will be discussed in detail in conjunction with FIG. 3.

Still referring to FIG. 2, internal data 214 may be related to at least one of a water temperature of water in the water recycling device, a flow rate of water in the water recycling device, a water quality of water in the water recycling device, and a time stamp associated with a use of the water recycling device.

In the context of internal data, the water temperature of water in the water recycling device may refer to a water temperature of water collected by the drain, and/or a water temperature of external water received from the external water path, and/or a water temperature of treated water, and/or a water temperature of water located anywhere else in the water recycling device.

Similarly, in the context of internal data, the flow rate of water in the water recycling device may refer to a flow rate of water from the drain to the recirculation loop, and/or a flow rate of external water from the external water path to the recirculation loop. The internal data related to a flow rate of water in the water recycling device may also comprise data received from the circulation pump, such as data reflecting a power consumption of the circulation pump.

In the context of internal data, the water quality of water in the water recycling device may refer to a water quality as measured by the sensor arrangement. In other words, the internal data may comprise data from the sensor arrangement.

External data 215 may be related to at least one of a temperature of air in contact with the water recycling device, a humidity of air in contact with the water recycling device, a geographical location of the water recycling device, and a price of electricity for operating the water recycling device.

In the context of external data, a temperature of air in contact with the water recycling may refer to receiving external data 215 related to a weather condition in an area where the water recycling device is located. Similarly, in the context of external data, a humidity of air in contact with the water recycling may refer to receiving external data 215 related to a weather condition in an area where the water recycling device is located. Such an area may for example be a room, a building, a city, a county, or the like.

In the context of external data, a price of electricity for operating the water recycling device may refer to a price of electricity delivered to the water recycling device.

External data may also refer to data related to another water recycling device. For example, external and internal data related to another water recycling device may be used as external data for the water recycling device in order to identify an external and/or internal condition. Hereby, it may be possible to collect data sets comprising internal and external data from a number of water recycling devices, wherein the data sets can be utilized in order to identify an external and/or internal condition with greater accuracy. For example, internal data of the water recycling device may be compared to internal and/or external data of another water recycling device with a known external condition in order to identify an external condition for the water recycling device.

Now referring to FIG. 3, an internal condition 300 of a water recycling device may relate to a condition of the water recycling device. The water recycling device may comprise an outlet, a drain, and a recirculation loop, wherein the recirculation loop may comprise a water treatment arrangement, a heating arrangement, and a circulation pump.

The internal condition of the water recycling device may thus relate to a state of the outlet. For example, the water recycling device may have been fitted with an outlet having a maximum capacity with respect to flow rate. The internal condition of the water recycling device in this case may thus be a maximum possible flow rate out of the outlet. A state of the outlet may also relate to a performance of the outlet with respect to a factory performance. In other words, the outlet may have a factory performance as specified by a provider, however it is not unlikely that the performance of the outlet may degrade over time, for example as a result of use. A state of the outlet may thus reflect an actual performance in relation to factory performance.

Above, an internal condition of the water recycling device has been described as relating to a state of an outlet has been specified. Similarly, an internal condition may relate to at least one of a state of a water treatment arrangement, a state of a heating arrangement, a state of a circulation pump, a state of a drain, and a state of a sensor arrangement. In other words, and similarly to above, other components of the water recycling device, such as the outlet, water treatment arrangement, sensor arrangement, circulation pump, heating arrangement, or a combination of the same, may have a factory performance, and a state of the components may reflect an actual performance in relation to factory performance.

Still referring to FIG. 3, an external condition 320 of a water recycling device may relate to a floor and/or a wall 322 of a space where the water recycling device is installed. In particular, an external condition may relate to a heat loss from water travelling from the outlet towards the drain. The external condition may relate to a heat transfer from water, travelling from the outlet towards the drain, to the floor and/or wall 322. In particular, an external condition may be that a specific type of floor and/or wall are present in connection to the water recycling device. An external condition may also be that a specific type of floor and/or wall with specific heat capacity properties are present in connection to the water recycling device.

A number of factors may influence such a heat loss. For example, the heat loss from water output by the outlet travelling towards the drain may be influenced by a temperature of air in contact with the water recycling device. The heat loss may be influenced by a humidity of air in contact with the water recycling device. Thus, an external condition, for example a heat loss from water output by the outlet travelling towards the drain, can be identified based on internal data, for example a temperature of water at the drain and at the outlet of the water recycling device.

The external condition may relate to a temperature of external water. In other words, the external condition may relate directly to the temperature of the external water entering the water recycling device via the external water path. For example, a water recycling device installed in a building may not be provided with external water having the same temperature as another water recycling device installed in another building. The external condition may also relate to a temperature of the external water with respect to time. For example, external water from an external water source may not have a static temperature. Instead, the temperature of the external water may fluctuate depending on for example a frequency of use of the external water. Similarly to the above, the external condition may relate to a flow rate of external water.

The external condition may relate to a type of application of the water recycling device. A type of application could for example refer to a type of facility, such as a medical facility, a public facility such as public restrooms, public swimming halls, hotels and the like, or private facilities such as private homes. In other words, the external condition may relate to a type of facility in which the water recycling device is installed. The type of application could also be related to the number of users of the water recycling device. For example, if the water recycling device is located in a public facility or in a home of a large family, a large number of users may be expected to use the water recycling device. The water recycling device could thus be said to be applied in a "large user base". Similarly, the water recycling device could be said to be applied in a "small user base" if the water recycling device is located in a private home with only one resident. A large user base may also be defined as a public facility; in other words, the type of application may refer to whether the water recycling device is installed in a public facility. Further, a small user base may be defined as a private facility. In other words, the type of application may refer to whether the water recycling device is installed in a private facility, such as a home, or in a public facility, such as a public swimming hall or a hotel.

The external condition may relate to a use of the water recycling device with respect to time. For example, the external condition may relate to a use pattern of the water recycling device with respect to time. Such an external condition may for example be that the water recycling device is used a number of times per day.

A number of operating parameters of the water recycling device may be automatically adjusted based on an identified external condition and/or internal condition. The number of operating parameters may comprise at least one operating parameter selected from the group consisting of a property of the heating arrangement, a property of the circulation pump, a property of the sensor arrangement, a property of the external water path, and a property of a cleaning cycle of said water recycling device. In this context, the term "property of" may refer to directly adjusting the object to which the term is referring. For example, adjusting a property of the heating arrangement may comprise adjusting an amount of heat transferred from the heating arrangement to the water in the water recycling device. The term "property of" may also refer to indirectly adjusting the object to which the term is referring. For example, adjusting a property of the circulation pump may comprise adjusting an amount of power available to the circulation pump, such that a flow of water in the water recycling device is altered.

In the context of operating parameters, a property of a cleaning cycle of the water recycling device may refer to a number of cleaning cycles to be performed in a given period of time. It may also refer to a characteristic of the cleaning cycle, such as a use of a specific cleaning agent.

According to another aspect of the inventive concept, it is possible to adapt a water recycling device to internal conditions. Such a method may comprise receiving internal data from the water recycling device; optionally receiving external data from a number of devices external to the water recycling device; identifying an internal condition of the water recycling device based on the internal and/or the external data; and automatically adjusting a number of operating parameters of the water recycling device based on the n internal condition.

Referring now to FIG. 4, an example of a method for adapting a water recycling device to external conditions is illustrated in a flow chart diagram. The method comprises a step of receiving 424 internal data generated by the water recycling device; a step of identifying 426 an external condition of the water recycling device based on the internal data; and a step of automatically adjusting 428 a number of operating parameters of the water recycling device based on the identified external condition.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

### List of reference signs

- 100: Water recycling device
- 102: Recirculation loop
- 104: Outlet
- 106: Drain
- 108: External water path
- 110: Circulation pump
- 112: Water treatment arrangement
- 214: Internal data
- 215: External data
- 216: Analysis
- 218: External condition
- 219: Internal condition
- 300: Internal condition
- 320: External condition
- 322: Wall and/or floor
- 424: Step of receiving internal data
- 426: Step of identifying an external condition
- 428: Step of adjusting a number of operating parameters

## Claims

1. A method for adapting a water recycling device (100) to external conditions( 218, 320), wherein the water recycling device (100) comprises
an outlet (104) configured to output treated water;
a drain (106) for collecting used water output from said outlet (104);
a recirculation loop (102) in liquid communication with said drain (106) and said outlet (104), said recirculation loop (102) comprising a water treatment arrangement (112) for treating said used water;
an external water path (108) in liquid communication with said recirculation loop (102), said external water path (108) being connected to an external water outlet and arranged to provide external water to the recirculation loop;
a circulation pump (110) for providing a flow in said water recycling device (100); and
a sensor arrangement configured to measure a water quality parameter of water in said water recycling device (100);
a heating arrangement for heating water in said water recycling device;
said method comprising the steps of:
receiving internal data (214) generated by said water recycling device (100), wherein said internal data is related to at least one of a water temperature, a flow rate, and a water quality, of water in said water recycling device, and a timestamp associated with a use of said water recycling device;
identifying an external condition (218, 320) of said water recycling device (100) based on said internal data (214), wherein said external condition is related to at least one of a heat loss from water travelling from said outlet to said drain, a temperature of said external water, and a flow rate of said external water; and
automatically adjusting a number of operating parameters of said water recycling device (100) based on said identified external condition (218, 320),
said method further comprising the step of receiving external data (215) generated by an external device, wherein said external data (215) is related to at least one of a temperature of air in contact with said water recycling device, a humidity of air in contact with said water recycling device, a geographical location of said water recycling device, and a price of electricity for operating said water recycling device, and wherein the step of identifying said external condition is further based on said external data (215);
said method further comprising the step of identifying an internal condition (219, 300) related to at least one of a state of said water treatment arrangement, a state of said sensor arrangement, a state of said outlet, a state of said circulation pump, and a state of said drain, wherein said step of identifying an internal condition is based on said internal data.
wherein said internal condition is related to a state of said heating arrangement;
wherein said step of identifying said internal condition is further based on said external data.

2. The method according to any one of the preceding claims, wherein said external condition is related to a use pattern of said water recycling device.

3. The method according to any one of the preceding claims, wherein said external condition is related to an operating cost of said water recycling device.

4. The method according to any one of the preceding claims, wherein said external condition is related to a type of application of said water recycling device.

5. The method according to any one of the preceding claims, wherein said number of operating parameters comprises at least one operating parameter selected from the group consisting of a property of said heating arrangement, a property of said circulation pump, a property of said sensor arrangement, a property of said external water path, and a property of a cleaning cycle of said water recycling device.

6. A water recycling device (100) comprising
an outlet (104) configured to output treated water;
a drain (106) for collecting used water output from said outlet (104);
a recirculation loop (102) in liquid communication with said drain (106) and said outlet (104), said recirculation loop (102) comprising a water treatment arrangement (112) for treating said used water;
an external water path (108) in liquid communication with said recirculation loop (102), said external water path (108) being connected to an external water outlet and arranged to provide external water to the recirculation loop;
a circulation pump (110) for providing a flow in said water recycling device (100); and
a sensor arrangement configured to measure a water quality parameter of water in said water recycling device (100);
a heating arrangement for heating water in said water recycling device ; and
a data processing device, said data processing device **characterized by** being configured to
receive internal data (214) generated by said water recycling device (100), wherein said internal data is related to at least one of a water temperature, a flow rate, and a water quality, of water in said water recycling device, and a timestamp associated with a use of said water recycling device;
identify an external condition (218, 320) of said water recycling device (100) based on said internal data (214) wherein said external condition is related to at least one of a heat loss from water travelling from said outlet to said drain, a temperature of said external water, and a flow rate of said external water; and
automatically adjust a number of operating parameters of said water recycling device (100) based on said identified external condition (218),
and further configured to receive external data (215) generated by an external device, wherein said external data (215) is related to at least one of a temperature of air in contact with said water recycling device, a humidity of air in contact with said water recycling device, a geographical location of said water recycling device, and a price of electricity for operating said water recycling device, and wherein the step involving to identify said external condition is further based on said external data (215)
and further configure to identify an internal condition (219, 300) related to at least one of a state of said water treatment arrangement, a state of said sensor arrangement, a state of said outlet, a state of said circulation pump, and a state of said drain, wherein said determination of said internal condition is based on said internal data.
wherein said internal condition is related to a state of said heating arrangement;
wherein said step of identifying said internal condition is further based on said external data.

## Patentansprüche

1. Verfahren zur Anpassung einer Wasserrecyclingvorrichtung (100) an externe Bedingungen (218, 320), wobei die Wasserrecyclingvorrichtung (100) umfasst:
einen Auslass (104), der ausgestaltet ist, um aufbereitetes Wasser auszugeben;
einen Abfluss (106) zum Auffangen der Brauchwasserausgabe aus dem Auslass (104);
eine Rezirkulationsschleife (102) in Flüssigkeitskommunikation mit dem Abfluss (106) und dem Auslass (104), wobei die Rezirkulationsschleife (102) eine Wasseraufbereitungsanordnung (112) zum Aufbereiten des Brauchwassers umfasst;
einen externen Wasserpfad (108) in Flüssigkeitskommunikation mit der Rezirkulationsschleife (102),
wobei der externe Wasserpfad (108) mit einem externen Wasserauslass verbunden ist und angeordnet ist, um der Rezirkulationsschleife externes Wasser bereitzustellen;
eine Zirkulationspumpe (110) zum Bereitstellen eines Flusses in der Wasserrecyclingvorrichtung (100); und
eine Sensoranordnung, die ausgestaltet ist, um einen Wasserqualitätsparameter des Wassers in der Wasserrecyclingvorrichtung (100) zu messen;
eine Heizanordnung zum Erwärmen von Wasser in der Wasserrecyclingvorrichtung;
wobei das Verfahren die Schritte umfasst:
Empfangen von internen Daten (214), die durch die Wasserrecyclingvorrichtung (100) generiert wurden, wobei die internen Daten mit mindestens einem von einer Wassertemperatur, einer Flussrate und einer Wasserqualität des Wassers in der Wasserrecyclingvorrichtung und einen Zeitstempel in Beziehung stehen, der mit einer Verwendung der Wasserrecyclingvorrichtung assoziiert ist;
Identifizieren einer externen Bedingung (218, 320) der Wasserrecyclingvorrichtung (100) basierend auf den internen Daten (214), wobei die externe Bedingung mit mindestens einem von einem Wärmeverlust von Wasser, das sich von dem Auslass zu dem Abfluss bewegt, einer Temperatur des externen Wassers und einer Flussrate des externen Wassers in Beziehung steht; und
automatisches Justieren einer Anzahl von Betriebsparametern der Wasserrecyclingvorrichtung (100) basierend auf der identifizierten externen Bedingung (218, 320),
wobei das Verfahren des Weiteren den Schritt des Empfangens von externen Daten (215) umfasst, die durch eine externe Vorrichtung generiert wurden, wobei die externen Daten (215) mit mindestens einem von einer Temperatur von Luft in Kontakt mit der Wasserrecyclingvorrichtung, einer Feuchtigkeit von Luft in Kontakt mit der Wasserrecyclingvorrichtung, einem geographischen Ort der Wasserrecyclingvorrichtung und einem Preis des elektrischen Stroms zum Betreiben der Wasserrecyclingvorrichtung in Beziehung stehen, und wobei der Schritt des Identifizierens der externen Bedingung des Weiteren auf den externen Daten (215) basiert; wobei das Verfahren des Weiteren umfasst:
den Schritt des Identifizierens einer internen Bedingung (219, 300), die mit mindestens einem von einem Zustand der Wasseraufbereitungsanordnung, einem Zustand der Sensoranordnung, einem Zustand des Auslasses, einem Zustand der Zirkulationspumpe und einem Zustand des Abflusses in Beziehung steht, wobei der Schritt des Identifizierens einer internen Bedingung auf den internen Daten basiert,
wobei die interne Bedingung mit einem Zustand der Heizanordnung in Beziehung steht;
wobei der Schritt des Identifizierens der internen Bedingung des Weiteren auf den externen Daten basiert.

2. Verfahren nach einem der vorhergehenden Ansprüche, wobei die externe Bedingung mit einem Nutzungsmuster der Wasserrecyclingvorrichtung in Beziehung steht.

3. Verfahren nach einem der vorhergehenden Ansprüche, wobei die externe Bedingung mit Betriebskosten der Wasserrecyclingvorrichtung in Beziehung stehen.

4. Verfahren nach einem der vorhergehenden Ansprüche, wobei die externe Bedingung mit einem Anwendungstyp der Wasserrecyclingvorrichtung in Beziehung steht.

5. Verfahren nach einem der vorhergehenden Ansprüche, wobei die Anzahl der Betriebsparameter mindestens einen Betriebsparameter ausgewählt aus der Gruppe bestehend aus einer Eigenschaft der Heizanordnung, einer Eigenschaft der Zirkulationspumpe, einer Eigenschaft der Sensoranordnung, einer Eigenschaft des externen Wasserpfads und einer Eigenschaft eines Reinigungszyklus der Wasserrecyclingvorrichtung umfasst.

6. Wasserrecyclingvorrichtung (100), umfassend:
einen Auslass (104), der ausgestaltet ist, um aufbereitetes Wasser auszugeben;
einen Abfluss (106) zum Auffangen der Brauchwasserausgabe aus dem Auslass (104);
eine Rezirkulationsschleife (102) in Flüssigkeitskommunikation mit dem Abfluss (106) und dem Auslass (104), wobei die Rezirkulationsschleife (102) eine Wasseraufbereitungsanordnung (112) zum Aufbereiten des Brauchwassers umfasst;
einen externen Wasserpfad (108) in Flüssigkeitskommunikation mit der Rezirkulationsschleife (102), wobei der externe Wasserpfad (108) mit einem externen Wasserauslass verbunden ist und angeordnet ist, um der Rezirkulationsschleife externes Wasser bereitzustellen;
eine Zirkulationspumpe (110) zum Bereitstellen eines Flusses in der Wasserrecyclingvorrichtung (100); und
eine Sensoranordnung, die ausgestaltet ist, um einen Wasserqualitätsparameter des Wassers in der Wasserrecyclingvorrichtung (100) zu messen;
eine Heizanordnung zum Erwärmen von Wasser in der Wasserrecyclingvorrichtung; und
eine Datenverarbeitungsvorrichtung,
wobei die Datenverarbeitungsvorrichtung **dadurch gekennzeichnet ist, dass** sie ausgestaltet ist zum:
Empfangen von internen Daten (214), die durch die Wasserrecyclingvorrichtung (100) generiert wurden, wobei die internen Daten mit mindestens einem von einer Wassertemperatur, einer Flussrate und einer Wasserqualität des Wassers in der Wasserrecyclingvorrichtung und einen Zeitstempel in Beziehung stehen, der mit einer Verwendung der Wasserrecyclingvorrichtung assoziiert ist;
Identifizieren einer externen Bedingung (218, 320) der Wasserrecyclingvorrichtung (100) basierend auf den internen Daten (214), wobei die externe Bedingung mit mindestens einem von einem Wärmeverlust von Wasser, das sich von dem Auslass zu dem Abfluss bewegt, einer Temperatur des externen Wassers und einer Flussrate des externen Wassers in Beziehung steht; und
automatisches Justieren einer Anzahl von Betriebsparametern der Wasserrecyclingvorrichtung (100) basierend auf der identifizierten externen Bedingung (218),
und des Weiteren ausgestaltet zum Empfangen von externen Daten (215), die durch eine externe Vorrichtung generiert wurden, wobei die externen Daten (215) mit mindestens einem von einer Temperatur von Luft in Kontakt mit der Wasserrecyclingvorrichtung, einer Feuchtigkeit von Luft in Kontakt mit der Wasserrecyclingvorrichtung, einem geographischen Ort der Wasserrecyclingvorrichtung und einem Preis des elektrischen Stroms zum Betreiben der Wasserrecyclingvorrichtung in Beziehung stehen, und wobei der Schritt, der am Identifizieren der externen Bedingung beteiligt ist, des Weiteren auf den externen Daten (215) basiert, und des Weiteren ausgestaltet ist zum Identifizieren einer internen Bedingung (219, 300), die mit mindestens einem von einem Zustand der Wasseraufbereitungsanordnung, einem Zustand der Sensoranordnung, einem Zustand des Auslasses, einem Zustand der Zirkulationspumpe und einem Zustand des Abflusses in Beziehung steht, wobei die Bestimmung der internen Bedingung auf den internen Daten basiert,
wobei die interne Bedingung mit einem Zustand der Heizanordnung in Beziehung steht;
wobei der Schritt des Identifizierens der internen Bedingung des Weiteren auf den externen Daten basiert.

## Revendications

1. Procédé d'adaptation d'un dispositif de recyclage d'eau (100) à des conditions externes (218, 320), le dispositif de recyclage d'eau (100) comprenant :
une sortie (104) configurée pour laisser sortir l'eau traitée ;
un drain (106) pour collecter l'eau usée sortant de ladite sortie (104) ;
une boucle de recirculation (102) en communication liquide avec ledit drain (106) et ladite sortie (104), ladite boucle de recirculation (102) comprenant un agencement de traitement d'eau (112) pour traiter ladite eau usée ;
un trajet d'eau externe (108) en communication liquide avec ladite boucle de recirculation (102), ledit trajet d'eau externe (108) étant raccordé à une sortie d'eau externe et agencé pour fournir de l'eau externe à la boucle de recirculation ;
une pompe de circulation (110) pour fournir un débit dans ledit dispositif de recyclage d'eau (100) ; et
un agencement de capteur configuré pour mesurer un paramètre de qualité de l'eau dans ledit dispositif de recyclage d'eau (100) ;
un agencement de chauffage pour chauffer l'eau dans ledit dispositif de recyclage d'eau ;
ledit procédé comprenant les étapes suivantes :
la réception de données internes (214) générées par ledit dispositif de recyclage d'eau (100), lesdites données internes étant relatives à au moins l'un parmi une température de l'eau, un débit et une qualité de l'eau dans ledit dispositif de recyclage d'eau, et un horodatage associé à une utilisation dudit dispositif de recyclage d'eau ;
l'identification d'une condition externe (218, 320) dudit dispositif de recyclage d'eau (100) sur la base desdites données internes (214), ladite condition externe étant relative à au moins l'un parmi une perte de chaleur de l'eau se déplaçant de ladite sortie vers ledit drain, une température de ladite eau externe et un débit de ladite eau externe ; et
le réglage automatique d'un certain nombre de paramètres de fonctionnement dudit dispositif de recyclage d'eau (100) sur la base de ladite condition externe identifiée (218, 320),
ledit procédé comprenant en outre l'étape de réception des données externes (215) générées par un dispositif externe, lesdites données externes (215) étant relatives à au moins l'un parmi une température de l'air en contact avec ledit dispositif de recyclage d'eau, une humidité de l'air en contact avec ledit dispositif de recyclage d'eau, une localisation géographique dudit dispositif de recyclage d'eau et un prix de l'électricité pour faire fonctionner ledit dispositif de recyclage d'eau, et l'étape d'identification de ladite condition externe étant en outre basée sur lesdites données externes (215) ;
ledit procédé comprenant en outre l'étape d'identification d'une condition interne (219, 300) relative à au moins l'un parmi un état dudit agencement de traitement d'eau, un état dudit agencement de capteur, un état de ladite sortie, un état de ladite pompe de circulation et un état dudit drain,
ladite étape d'identification d'une condition interne étant basée sur lesdites données internes ;
ladite condition interne étant relative à un état dudit agencement de chauffage ;
ladite étape d'identification de ladite condition interne étant en outre basée sur lesdites données externes.

2. Procédé selon l'une quelconque des revendications précédentes, ladite condition externe étant relative à un motif d'utilisation dudit dispositif de recyclage d'eau.

3. Procédé selon l'une quelconque des revendications précédentes, ladite condition externe étant relative à un coût d'exploitation dudit dispositif de recyclage d'eau.

4. Procédé selon l'une quelconque des revendications précédentes, ladite condition externe étant relative à un type d'application dudit dispositif de recyclage d'eau.

5. Procédé selon l'une quelconque des revendications précédentes, ledit nombre de paramètres de fonctionnement comprenant au moins un paramètre de fonctionnement choisi dans le groupe constitué d'une propriété dudit agencement de chauffage, d'une propriété de ladite pompe de circulation, d'une propriété dudit agencement de capteur, d'une propriété dudit trajet d'eau externe et d'une propriété d'un cycle de nettoyage dudit dispositif de recyclage d'eau.

6. Dispositif de recyclage d'eau (100) comprenant :
une sortie (104) configurée pour évacuer l'eau traitée ;
un drain (106) pour collecter l'eau usée sortant de ladite sortie (104) ;
une boucle de recirculation (102) en communication liquide avec ledit drain (106) et ladite sortie (104), ladite boucle de recirculation (102) comprenant un agencement de traitement d'eau (112) pour traiter ladite eau usée ;
un trajet d'eau externe (108) en communication liquide avec ladite boucle de recirculation (102), ledit trajet d'eau externe (108) étant raccordé à une sortie d'eau externe et agencé pour fournir de l'eau externe à la boucle de recirculation ;
une pompe de circulation (110) pour fournir un débit dans ledit dispositif de recyclage d'eau (100) ; et
un agencement de capteur configuré pour mesurer un paramètre de qualité de l'eau dans ledit dispositif de recyclage d'eau (100) ;
un agencement de chauffage pour chauffer l'eau dans ledit dispositif de recyclage d'eau ; et
un dispositif de traitement de données, ledit dispositif de traitement de données étant **caractérisé par le fait qu'**il est configuré pour
recevoir des données internes (214) générées par ledit dispositif de recyclage d'eau (100), lesdites données internes étant relatives à au moins l'un parmi une température de l'eau, un débit et un qualité de l'eau dans ledit dispositif de recyclage d'eau, ainsi qu'un horodatage associé à l'utilisation dudit dispositif de recyclage d'eau ;
identifier une condition externe (218, 320) dudit dispositif de recyclage d'eau (100) sur la base desdites données internes (214), ladite condition externe étant relative à au moins l'une parmi une perte de chaleur de l'eau se déplaçant de ladite sortie vers ledit drain, une température de ladite eau externe et un débit de ladite eau externe ; et
ajuster automatiquement un certain nombre de paramètres de fonctionnement dudit dispositif de recyclage d'eau (100) sur la base de ladite condition externe identifiée (218), et configuré en outre pour recevoir des données externes (215) générées par un dispositif externe, lesdites données externes (215) étant relatives à au moins l'un parmi une température de l'air en contact avec ledit dispositif de recyclage d'eau, une humidité de l'air en contact avec ledit dispositif de recyclage d'eau, une localisation géographique dudit dispositif de recyclage d'eau, et un prix de l'électricité pour faire fonctionner ledit dispositif de recyclage d'eau, et l'étape impliquant l'identification de ladite condition externe étant en outre basée sur lesdites données externes (215)
et configurer en outre pour identifier une condition interne (219, 300) relative à au moins l'un parmi un état dudit agencement de traitement d'eau, un état dudit agencement de capteur, un état de ladite sortie, un état de ladite pompe de circulation, et un état dudit drain, ladite détermination de ladite condition interne étant basée sur lesdites données internes,
ladite condition interne étant relative à un état dudit agencement de chauffage ;
ladite étape d'identification de ladite condition interne étant en outre basée sur lesdites données externes.
